# EUROPÄISCHE PATENTSCHRIFT

(11) **EP 0 653 558 B1**
(45) Veröffentlichungstag und Bekanntmachung des Hinweises auf die Patenterteilung: **22.04.1998**
(21) Anmeldenummer: 93810783.6
(22) Anmeldetag: 12.11.1993
(51) Int. Cl.: F02M 25/07, F02B 37/12, F02B 37/00

(54) **Verfahren zum Vermindern der Stickoxydmenge im Abgas eines Zweitakt-Grossdieselmotors und Motor zum Durchführen des Verfahrens**
Process and engine for reducing the nitrous oxide content of exhaust gas of a two stroke internal combustion Diesel engine
Procédé pour diminuer le contenu en oxyde d'azote des gaz d'échappement d'un moteur à combustion interne du type Diesel à deux temps et ce moteur

(43) Veröffentlichungstag der Anmeldung: 17.05.1995
(73) Patentinhaber: Wärtsilä NSD Schweiz AG, 8401 Winterthur (CH)
(72) Erfinder: Geist, Markus, CH-8050 Zürich (CH)
(74) Vertreter: Hammer, Bruno, Dr.

(56) Entgegenhaltungen:
- EP-A- 0 306 829
- DE-A- 3 047 939
- DE-A- 3 517 177
- US-A- 4 539 948

## Beschreibung

Die Erfindung bezieht sich auf ein Verfahren zum Vermindern des Stickoxydgehaltes im Abgas eines mindestens einen Zylinder aufweisenden Zweitakt-Grossdieselmotors mit den Merkmalen des Oberbegriffs des Anspruchs 1.

Beim Betrieb von Dieselmotoren allgemein entstehen beträchtliche Mengen an Stickoxyd. Wegen der sich verschärfenden Vorschriften auf dem Gebiet des Umweltschutzes ist es notwendig, die Stickoxydemissionen auch bei Zweitakt-Grossdieselmotoren drastisch herabzusetzen. Eine Möglichkeit dazu besteht in der sogenannten selektiven katalytischen Reduktion (SCR-Verfahren), wobei die Stickoxyde mit Ammoniak oder einem Ammoniakträger katalytisch zu Stickstoff und Wasser reduziert werden. Bei einer aus der PCT-Anmeldung WO 83/00057 bekannten Anwendung des SCR-Verfahrens an einem Dieselmotor ist der Katalysator in Form eines Bettes in einem Reaktor angeordnet, der in die Abgasleitung eingebaut ist. Hierbei ist der Raumbedarf beträchtlich, indem der das Katalysatorbett enthaltende Reaktor einen grösseren Durchmesser als die Abgasleitung aufweist. Insbesondere in den Fällen, in denen der Dieselmotor als Antrieb für grosse Schiffe dient, können deshalb Platzprobleme bei der Anordnung des Reaktors entstehen.

Eine andere Möglichkeit zum Herabsetzen der Stickoxydemissionen besteht in der Anwendung sogenannter Primärmassnahmen, wobei das Entstehen von Stickoxyden im Brennraum des Zylinders vermindert wird. Hierbei wird der in den Zylinder eintretenden Frischluft, auch Spülluft genannt, ausserhalb des Zylinders Abgas zugefügt, um die Sauerstoffkonzentration im Brennraum herabzusetzen, da die bei der Verbrennung entstehende Stickoxydmenge unter anderem von der Sauerstoffkonzentration abhängig ist. Eine weitere Abhängigkeit der Stickoxydbildung ist durch die Temperatur im Brennraum gegeben. Das erwähnte Hinzufügen von Abgas zur Frischluft geschieht entweder auf der Niederdruckseite oder auf der Hochdruckseite des Kompressors der Aufladegruppe. Im zuerst genannten Fall passiert das der Frischluft zugemischte Abgas sowohl den Kompressor als auch einen diesem nachgeschalteten Ladeluftkühler, was zu erheblichen Verschmutzungsproblemen sowohl im Kompressor als auch im Ladeluftkühler führen kann. Beim Hinzufügen von Abgas auf der Hochdruckseite des Kompressors ist nachteilig, dass das aus dem Zylinder austretende Abgas einen tieferen Druck aufweist als die zum Zylinder strömende Frischluft. Das der Frischluft zugeführte Abgas muss deshalb auf ein höheres Druckniveau gebracht werden, wozu eine Pumpe, z.B. ein Rootsgebläse, vorgesehen werden muss. Eine Verschmutzung des Ladeluftkühlers ist auch dabei nicht ausgeschlossen. Die erwähnten Nachteile haben dazu geführt, dass sich das Hinzufügen von Abgas zur Frischluft, auch Abgasrezirkulation genannt, sich in der Praxis für Zweitakt-Grossdieselmotoren nicht hat durchsetzen können.

Der Erfindung liegt die Aufgabe zugrunde, das eingangs genannte Verfahren zum Vermindern des Stickoxydgehaltes dahingehend zu verbessern, dass keine Verschmutzung des Kompressors und des Ladeluftkühlers mehr auftritt und dass das Anbringen einer Druckerhöhungspumpe entfällt.

Diese Aufgabe wird erfindungsgemäss durch die im Kennzeichen des Anspruchs 1 genannten Verfahrensschritte gelöst.

Bei diesem Verfahren wird also nicht - wie im normalen Dieselbetrieb angestrebt - möglichst die gesamte, während eines Verbrennungsvorgangs entstehende Abgasmenge aus dem Zylinder herausgespült, sondern es bleibt eine beträchtliche Menge des Abgases im Zylinder zurück, d.h. es wird bewusst eine verschlechterte Spülung in Kauf genommen. Durch das Mischen des im Zylinder zurückgebliebenen Abgases mit der Frischluftmenge während des nächsten Kompressionshubes wird die Sauerstoffkonzentration im Brennraum beträchtlich herabgesetzt, was sich vermindernd auf die Stickoxydbildung auswirkt. Durch das Einspritzen von Wasser mindestens während eines Teils jedes Kompressionshubes in das im Zylinder befindliche Frischluft/Abgasgemisch wird der starken Temperaturerhöhung, die sich wegen der grossen Mengen von im Zylinder zurückbehaltenem Abgas während des Kompressionshubes im Vergleich zu einem Dieselmotor mit normaler Spülung ergeben würde, entgegengewirkt, was sich ebenfalls vermindernd auf die Stickoxydbildung auswirkt.

Mit dem neuen Verfahren wird zugleich der konstruktive und betriebsmässige Aufwand verringert, indem keine Druckerhöhungspumpe vorgesehen werden muss bzw. keine Verschmutzung des Kompressors und des Ladeluftkühlers mehr auftritt.

Das Zurückbehalten der Teilmenge des Abgases kann dadurch geschehen, dass zwischen dem Austritt des Kompressors und dem Eintritt des Zylinders eine entsprechende Teilmenge der Frischluft entnommen wird, so dass eine geringere Frischluftmenge als normalerweise üblich in den Zylinder eintritt, die weniger Abgas als üblich beim Kompressionshub verdrängt. Eine andere Möglichkeit besteht darin, dass eine Teilmenge des aus dem Zylinder austretenden Abgases an der Turbine der Aufladegruppe vorbeigeführt wird, so dass eine entsprechend kleinere Frischluftmenge vom Kompressor zum Zylinder gefördert wird. Die an der Turbine vorbeigeführte Abgasteilmenge kann dann in einer sogenannten Nutzturbine entspannt werden.

Aus der US-PS 4,539,948 ist ein Zweitakt-Dieselmotor mit einer aus Turbine und Kompressor bestehenden Aufladegruppe bekannt, der mit Methanol oder anderen eine niedere Zetanzahl aufweisenden Brennstoffen betrieben werden soll. Für solche Brennstoffe muss die Zündtemperatur im Zylinder wesentlich höher liegen als für normalen Dieselbrennstoff. Ausser der Aufladegruppe weist der Motor ein Rootsgebläse auf, das von der Motorwelle angetrieben ist und zwischen dem Austritt des Kompressors und einem Ladeluftkühler angeordnet ist. Zum Steuern der Ladelufttemperatur ist ein das Rootsgebläse umgehender Bypass vorgesehen, in dem ein Klappenventil angeordnet ist. Um auf die für Methanol notwendige hohe Zündtemperatur zu kommen, wird die in den Zylinder strömende Ladeluftmenge verringert, wodurch ein Teil des Abgases des vorhergehenden Arbeitstaktes im Zylinder verbleibt.

Aus der DE-OS 30 47 939 ist ein Brennkraftmaschine bekannt, die im Sechstaktverfahren mit Wassereinspritzung arbeiten soll. Dem Ansaugen eines Brennstoff-Luft-Gemisches (erster Takt), dem Verdichten und Zünden dieses Gemisches (zweiter Takt) sowie dem dritten Arbeitstakt folgen bei geschlossenem Auslassventil ein Verdichten der Verbrennungsgase mit Einspritzen von Wasser (vierter Takt) und ein weiterer Arbeitstakt (fünfter Takt) und schliesslich das Ausschieben der Verbrennungsgase und des entspannten Dampfes (sechster Takt). Mit dem Einspritzen von Wasser soll der Wärmeinhalt der Verbrennungsgase für das Erzeugen von Dampf nutzbar gemacht werden, so dass zusätzlich mechanische Energie gewonnen wird.

Aus der DE-OS 35 17 177 ist eine Zweitakt-Brennkraftmaschine bekannt, bei der eine Einspritzpumpe für Brennstoff und eine Einspritzpumpe für Wasser vorgesehen ist. Die beiden Pumpen sind so gesteuert, dass in einem Arbeitstakt Brennstoff und im nächsten Arbeitstakt Wasser in feinverteilter Form in den Zylinder eingespritzt wird. Ausser einem hohen Wirkungsgrad soll durch die Wassereinspritzung eine Innenkühlung des Zylinders errreicht werden, so dass es keiner Aussenkühlung bedarf.

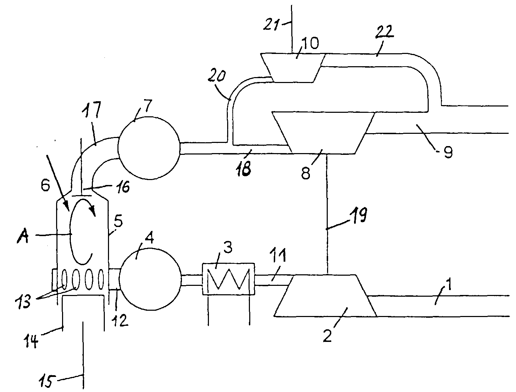

Ein Ausführungsbeispiel der Erfindung ist in der folgenden Beschreibung anhand der Zeichnung näher erläutert, die schematisch einen Zweitakt-Grossdieselmotor zum Durchführen des erfindungsgemässen Verfahrens darstellt.

Mit 1 ist eine Saugleitung eines Kompressors 2 bezeichnet, der zusammen mit einer Abgasturbine 8 eine Aufladegruppe bildet und der aus der Atmosphäre Frischluft ansaugt. Eine Druckleitung 11 am Austritt des Kompressors 2 führt über einen Ladeluftkühler 3 in einen Einlassreceiver 4, der über einen Verteilring 12 mit einem Zylinder 5 eines Zweitakt-Grossdieselmotors in Verbindung steht. An den Einlassreceiver sind weitere, hier nicht dargestellte Zylinder des Dieselmotors angeschlossen. Im unteren Bereich des Zylinders 5 sind über dessen Umfang verteilt mehrere Spülluftschlitze 13 vorgesehen, über die von dem jeweils einen Zylinder umgebenden Verteilring 12 aus die Frischluft in den Zylinder 5 eintritt. Unterhalb der Spülluftschlitze 13 ist ein Kolben 14 vorgesehen, der in seiner unteren Totpunktstellung dargestellt ist und über eine Kolbenstange 15 mit einem nicht dargestellten Kreuzkopf verbunden ist. Am Kreuzkopf ist in bekannter Weise eine Schubstange angelenkt, die mit einer Kurbelwelle in Verbindung steht.

Am oberen Ende des Zylinders 5 ist ein Abgasstutzen 17 angeschlossen, der zu einem Auspuffsammelrohr 7 führt, an dem in gleicher Weise auch die übrigen Zylinder des Dieselmotors angeschlossen sind. An der Anschlussstelle des Abgasstutzens 7 am Zylinder ist ein zentrales Auslassventil 16 angeordnet, das während eines Teils des Kolbenhubes sich in Offenstellung befindet, so dass dann beim vorhergehenden Verbrennungsvorgang entstandenes Abgas aus dem Zylinder 5 entweichen kann. Der dargestellte Zweitakt-Grossdieselmotor arbeitet also mit der sogenannten Längsspülung.

Vom Auspuffsammelrohr 7 führt eine Abgasleitung 18 zum Eintritt der Abgasturbine 8, die über eine Welle 19 den Kompressor 2 antreibt. Am Austritt der Abgasturbine 8 ist eine Abgasleitung 9 angeschlossen. Von der Abgasleitung 18 zweigt eine Leitung 20 ab, die zu einer Nutzturbine 10 führt und die über eine Welle 21 z.B. einen nicht dargestellten elektrischen Generator antreibt. Der Austritt der Nutzturbine 10 ist über eine Leitung 22 mit der Abgasleitung 9 stromunterhalb der Abgasturbine 8 verbunden.

Am oberen Ende des Zylinders 5 ist mit 6 eine Wassereinspritzvorrichtung angedeutet. Ausser dieser Wassereinspritzvorrichtung 6 sind am oberen Zylinderende in bekannter Weise mindestens zwei nicht dargestellte Brennstoffeinspritzventile vorgesehen.

Im Betrieb des Zweitakt-Grossdieselmotors wird mit Hilfe des Kompressors 2 verdichtete und im Ladeluftkühler 3 gekühlte Frischluft dem Einlassreceiver 4 zugeführt, aus dem die Luft über den Verteilring 12 und die Spülluftschlitze 13 in den Zylinder 5 eintritt. Solange das Auslassventil 16 in geöffneter Stellung ist, verdrängt die zugeführte Luft den grössten Teil des bei dem vorhergehenden Verbrennungsvorgang im Brennraum des Zylinders entstandenen Abgases über den Abgasstutzen 17 in das Auspuffsammelrohr 7. Beim Aufwärtsbewegen des Kolbens 14 wird nach dem Ueberfahren der oberen Begrenzung der Spülluftschlitze 13 und dem Schliessen des Auslassventils 16 das dann noch im Zylinder 5 befindliche Gemisch aus Abgas und Frischluft komprimiert. Während dieser Kompressionsphase wird über die Einspritzvorrichtung 6 Wasser in das Gemisch eingespritzt, um das Gemisch zu kühlen. Wenn der Kolben 14 seinen oberen Totpunkt erreicht, wird über die nicht dargestellten Brennstoffeinspritzventile Brennstoff in den Brennraum eingespritzt, wonach sich der Kolben wieder abwärts bewegt. Aus dem Auspuffsammelrohr 7 gelangt eine Teilmenge des Abgases über die Abgasleitung 18 zur Abgasturbine 8. Da diese Abgasmenge wegen des Vorbeiführens der Abgasteilmenge über die Leitung 20, die Nutzturbine 10 und die Leitung 22 verringert ist, fördert der Kompressor 2 eine entsprechend verringerte Luftmenge in den Zylinder 5, was zur Folge hat, dass eine beträchtliche Menge des beim Verbrennungsvorgang entstandenen Abgases im Zylinder 5 zurückbleibt. Die zurückbleibende Menge beträgt mehr als 5 Gewichtsprozente, vorzugsweise 20 Gewichtsprozente, der beim Verbrennungsvorgang entstandenen Abgasmenge. Durch das Zurückbleiben dieser beträchtlichen Abgasmenge im Zylinder 5 wird eine intensive Vermischung mit der eingetretenen Frischluft erreicht (durch den Pfeil A angedeutet), so dass die Sauerstoffkonzentration des im Brennraum befindlichen Gemisches verhältnismässig niedrig ist. Ausserdem wird durch das Einspritzen von Wasser während der Kompressionsphase die dabei entstehende Temperaturerhöhung des Gemisches reduziert. Die derart gesenkte Temperatur und die niedrige Sauerstoffkonzentration lassen bei der anschliessenden Verbrennung eine verringerte Stickoxydmenge entstehen. Diese Verringerung kann noch dadurch weitergetrieben werden, dass während des Verbrennungsvorganges über die Einspritzvorrichtung 6 Wasser in den Brennraum eingespritzt wird, so dass auch die höchste Verbrennungstemperatur im Brennraum verringert wird.

Die beschriebene Motorenanlage hat ausser den schon erwähnten Vorteilen noch den Vorteil, dass wegen der verringerten Abgasmenge, die die Abgasturbine 8 durchströmt, und wegen der verringerten Luftmenge im Kompressor 2 die Aufladegruppe kleiner dimensioniert werden kann als bei Dieselmotoren mit normaler Längsspülung.

## Patentansprüche

1. Verfahren zum Vermindern des Stickoxydgehaltes im Abgas eines mindestens einen Zylinder (5) aufweisenden Zweitakt-Grossdieselmotors, der mit einer aus Turbine (8) und Kompressor (2) bestehenden Aufladegruppe versehen ist, wobei der Zylinder während des Kompressionshubes von der Aufladegruppe mit Frischluft beschickt wird, in die gegen Ende des Kompressionshubes Brennstoff eingespritzt wird, dadurch gekennzeichnet, dass von der während jeweils eines Verbrennungsvorganges im Zylinder (5) entstehenden Abgasmenge eine zwischen mindestens 5 und höchstens 40 Gewichtsprozent, vorzugsweise höchstens 20 Gewichtsprozent, liegende Menge im Zylinder (5) zurückbehalten wird, dass diese zurückbehaltene Abgasmenge mit der während des nächsten Kompressionshubes einströmenden Frischluft ein Gemisch bildet und dass während mindestens eines Teils jedes Kompressionshubes Wasser in das im Zylinder (5) befindliche Frischluft/Abgasgemisch eingespritzt wird.

2. Verfahren nach Anspruch 1, dadurch gekennzeichnet, dass das Zurückbehalten der Abgasmenge durch Verringern der Frischluftbeschickung des Zylinders (5) geschieht.

3. Verfahren nach Anspruch 2, dadurch gekennzeichnet, dass das Verringern der Frischluftbeschickung durch Vorbeiführen einer Teilmenge des den Zylinder (5) verlassenden Abgases an der Turbine (8) geschieht.

4. Verfahren nach Anspruch 3, dadurch gekennzeichnet, dass die Energie der vorbeigeführten Teilmenge des Abgases in einer Nutzturbine (10) ausgenützt wird.

5. Verfahren nach einem der Ansprüche 1 bis 4, dadurch gekennzeichnet, dass auch während des Verbrennungsvorganges Wasser in das im Zylinder (5) befindliche Frischluft/Abgasgemisch eingespritzt wird.

6. Verfahren nach einem der Ansprüche 1 bis 5, dadurch gekennzeichnet, dass die im Kompressor (2) verdichtete Luft vor dem Eintritt in den Zylinder (5) gekühlt wird.

7. Zweitakt-Grossdieselmotor zum Durchführen des Verfahrens nach einem der Ansprüche 1 bis 6.

## Claims

1. A process for reducing the nitrous oxide content in the exhaust gas of a two-stroke large Diesel engine comprising at least one cylinder (5), which is provided with a supercharging group consisting of a turbine (8) and compressor (2), with which during the compression stroke the cylinder is charged with fresh air by the supercharging group, into which fuel is injected towards the end of the compression stroke,
**characterised in that** from the quantity of exhaust gas produced in the cylinder (5) during a combustion operation, an amount lying between at least 5 and at most 40 percent by weight, preferably at most 20 percent by weight, is retained in the cylinder (5),
in that this retained amount of exhaust gas forms a mixture with the fresh air flowing in during the next compression stroke,
**and in that** during at least one part of each compression stroke water is injected into the fresh air/exhaust air mixture in the cylinder.

2. A process according to Claim 1,
**characterised in that** the retention of the quantity of exhaust gas occurs by reducing the charging of the cylinder (5) with fresh air.

3. A process according to Claim 2,
**characterised in that** the reduction of the fresh air charging occurs by conveying a partial quantity of the exhaust gas leaving the cylinder (5) past the turbine (8).

4. A process according to Claim 3,
**characterised in that** the energy of the partial quantity of the exhaust gas conveyed past is utilised in an active turbine (10).

5. A process according to one of Claims 1 to 4,
**characterised in that** water is also injected into the fresh air/exhaust gas mixture in the cylinder (5) during the combustion operation.

6. A process according to one of Claims 1 to 5,
**characterised in that** the air compressed in the compressor (2) is cooled before entering the cylinder (5).

7. A two-stroke large Diesel engine for performing the process according to one of Claims 1 to 6.

## Revendications

1. Procédé pour diminuer la teneur en oxyde d'azote dans les gaz d'échappement d'un moteur Diesel de forte puissance à deux temps présentant au moins un cylindre(5), qui est pourvu d'un groupe de charge se composant d'au moins une turbine (8) et un compresseur (2), où le cylindre pendant la course de compression reçoit, du groupe de charge, de l'air frais, où à peu près à la fin de la course de compression, du carburant est injecté, caractérisé en ce que de la quantité de gaz d'échappement produite à chaque fois pendant un processus de combustion dans le cylindre (5), une quantité comprise entre au moins 5 et au plus 40% en poids, avantageusement au plus 20% en poids, est retenue dans le cylindre (5), en ce que cette quantité retenue des gaz d'échappement forme un mélange avec l'air frais pénétrant pendant la course suivante de compression et en ce que pendant au moins une partie de chaque course de compression, de l'eau est injectée dans le mélange air frais/gaz d'échappement qui se trouve dans le cylindre (5).

2. Procédé selon la revendication 1, caractérisé en ce que la retenue de la quantité de gaz d'échappement se produit par diminution de la charge d'air frais du cylindre (5).

3. Procédé selon la revendication 2, caractérisé en ce que la diminution de la charge d'air frais se produit par passage d'une quantité partielle des gaz d'échappement quittant le cylindre (5) à côté de la turbine (8).

4. Procédé selon la revendication 3, caractérisé en ce que l'énergie de la quantité partielle des gaz d'échappement passant à côté est exploitée dans une turbine utilitaire (10).

5. Procédé selon l'une des revendications 1 à 4, caractérisé en ce que, même pendant le processus de combustion, de l'eau est injectée dans le mélange air frais/gaz d'échappement se trouvant dans le cylindre (5).

6. Procédé selon l'une des revendications 1 à 5, caractérisé en ce que l'air comprimé dans le compresseur (2) est refroidi avant entrée dans le cylindre (5).

7. Moteur Diesel de forte puissance à deux temps pour la mise en oeuvre du procédé selon l'une des revendications 1 à 6.
